# EUROPEAN PATENT SPECIFICATION

(11) **EP 1 402 734 B1**
(45) Date of publication and mention of the grant of the patent: **14.04.2010**
(21) Application number: 02748778.4
(22) Date of filing: 14.06.2002
(51) Int. Cl.: H04N 7/173

(54) **PROCESS FOR SYNCHRONIZING THE TRANSMISSION OF PROGRAMS AND THE INCORPORATION OF TRANSMISSION CONTENTS, CORRESPONDING DEVICES AND PRODUCTS**
PROZESS ZUM SYNCHRONISIEREN DER ÜBERTRAGUNG VON PROGRAMMEN UND DER INTEGRATION VON ÜBERTRAGUNGSINHALTEN, ENTSPRECHENDE EINRICHTUNGEN UND PRODUKTE
PROCEDE SERVANT A SYNCHRONISER LA TRANSMISSION DE PROGRAMMES ET L'INCORPORATION DE CONTENUS DE TRANSMISSION, DISPOSITIFS ET APPAREILS CORRESPONDANTS

(30) Priority: 15.06.2001 FR 0107867
(43) Date of publication of application: 31.03.2004
(73) Proprietor: Thomson Licensing, 92443 Issy-les-Moulineaux Cedex (FR)
(72) Inventor: LESENNE, Laurent, F-35690 Acigne (FR); PASQUIER, Frédéric, F-35890 Laille (FR)
(74) Representative: Kerber, Thierry
(86) International application number: PCT/EP2002/006571
(87) International publication number: WO 2002/104027

(56) References cited:
- WO-A-01/36061
- WO-A-99/04568
- US-A- 4 926 255

## Description

The present invention relates to the synchronization of broadcasting of programs to users and the incorporation of broadcast contents into these programs, in particular for interactive television. It also pertains to corresponding devices and products.

Interactive television allows a viewer to act on the progress of the transmissions which he is watching. He can thus interact with interactive services. To do this, mass-market interactive terminals are connected to a dual communication network:
- a bidirectional network (return path by modem, cable, etc.) of point-to-point type, such as in particular a telephone network, implementing one or more point-to-point servers,
- and a unidirectional distribution network, such as in particular a terrestrial, cable or satellite TV broadcasting network, implementing one or more broadcasting servers; the expression "broadcasting" is understood to mean the transmission of identical data to a set of destinations, whether this be done in particular by radio broadcasting, by cable or by Internet.

The relevant terminals consist for example of television receivers, of DVB (standing for Digital Video Broadcasting) decoders or of Internet decoders. The interactive services are generally downloaded into the terminals by broadcasting via the bidirectional network. The audiovisual programs broadcast synchronously either with such services, or with web addresses (also referred to as URLs standing for Universal Resource Locators or universal addresses) of such services, are then referred to as "enhanced programs".

In practice, the known techniques of interactive television rely on the following operations. A broadcasting center, or broadcaster, is used as a means of broadcasting an interactive service emanating from a service operator, synchronously with an audiovisual program (unidirectional network). For this purpose, data relating to this service are conveyed together with audiovisual signals specific to this program. When an interactive terminal receives the enhanced program thus obtained, it broadcasts to the screen (picture and sound) the audiovisual program and interprets the data of the interactive service. It then screens the latter in synchronization with the audiovisual program, typically in the form of a graphical or textual display overlaid on the video.

A television viewer can then interact with the interactive service, by initiating a connection with a server of the service operator (bidirectional network). Information originating from various viewers is collected in the form of requests by a set of such servers and is generally consolidated for utilization. This utilization takes the form for example of an announcement of results of processing during the transmission or of a broadcasting of an interactive service related to these results.

In what follows, the expression "contents" of services to be broadcast with programs refers both to the services themselves and to references or URLs enabling these services to be accessed via servers.

One of the essential aspects of interactive television pertains to the deployment and management of synchronization between programs and interactive services data. Two items of broadcaster equipment are customarily used to do this:
- a traffic system, which creates an events execution list (playlist) comprising time information (start time and end time), object information (device to be controlled) and operation information (command to be executed);
- and an automation system, which manages the execution list so as to control and command the broadcaster's broadcasting equipment (video servers, video recorders, subtitling apparatus, etc.)

The traffic system makes it possible to carry out modifications to the execution list should there be significant modifications in the temporal organization of the programs. The automation system is for its part capable of readjusting the list should there be last-minute minor modifications, and of retailoring the list to the traffic system if more important modifications are required.

The synchronization of the interactive services with the programs is achieved by integrating a broadcasting server (which acts as server of interactive applications) among the devices to be controlled by the automation system. Problems of desynchronization between the broadcasting of the programs and those of associated interactive contents are thus avoided. Specifically, if an audiovisual program is delayed or advanced, the execution list is updated by the broadcaster. In this way, the devices used - including the broadcasting server - trigger at the appropriate moments.

However, the retrieving of the requests originating from the interactive terminals and their processing in due time remains problematic. Specifically, account has to be taken not only of elements of the broadcaster, but also of elements of the service operator, which are a priori independent. However, ensuring overall synchronization by sending triggering signals from the broadcaster to the service operator runs the risk of proving complex and, what is more, of not always taking account of temporal readjustments should there be an advance or delays.

For example, the broadcaster wishes to present the results of a game through a video inlay, these results stemming from the processing of responses originating from numerous viewers (winner of a competition, number of participants, etc.). The broadcaster must then trigger the processing at least early enough to obtain the results a moment before the end of the transmission, and late enough to take account of the largest possible number of participants. However, delay or early broadcasting of the transmission runs the risk of posing significant difficulties in relation to this synchronization.

The present invention pertains to a process for synchronizing the transmission of programs and the incorporation of transmission contents into these programs, which is furthermore capable of ensuring synchronization of operations relating to the processing of data.

The process of the invention applies to the processing of data originating from users, and more generally to the processing of any data, and makes efficient and reliable synchronization possible and implementable in an economical manner.

It applies not only to interactive television but also to interactive radio, and also finds applications in other areas of interactivity involving transmission to users.

The invention also pertains to devices suitable for implementing the synchronizing process of the invention, including processing modules respectively of a transmission center of a service operator (as well as a corresponding transmission center and corresponding service operator) and of a transmission server, as well as a corresponding traffic system, a corresponding transmission list for transmitter and a corresponding computer program product.

Accordingly, the subject of the invention is a process for synchronizing the transmission of programs to users and the incorporation of transmission contents into said programs, in which:
- command instructions are sent in a time-organized manner to at least one transmission device for transmitting programs and to at least one transmission server,
- the programs and the contents are produced respectively by means of the transmission device and of the transmission server, under the immediate effect of said commands,
- and the contents are incorporated forthwith into the programs before transmission to the users.

According to the invention:
- instructions which are incompressible to the server and relate to processings of data to be processed by at least one service operator are sent among the command instructions submitted to the transmission server,
- when said server receives command instructions which it is incapable of comprehending, said instructions are immediately routed to at least one transmission center of the service operator by means of said server,
- and immediate executions of the commands emanating from the instructions received by the transmission center are triggered by means of the transmission center.

In this way, the transmission of the programs is synchronized with operations relating to the processings of the data.

Moreover, the transmission to the users is preferably a broadcasting.

Thus, the timing of the control instructions intended for the broadcasting is used for the processings of data by the service operator. This makes it possible to ensure perfect synchronization of the operations performed on either side. This joint use of one and the same organization over time is achieved by virtue of automatic returning by the transmission server to the service operator, of the instructions which it is not able to comprehend. In this way, the routing of the instructions destined for the service operator is almost immediate.

This solution contrasts with what the person skilled in the art might expect in respect of sufficiently accurate overall synchronization, namely a centralized system of time organization, located at the level of a transmitter, which would send instructions both to the device and to the transmission server, on the one hand, and to the transmission center of the service operator, on the other hand. Relative to such an embodiment, the synchronization process of the invention can offer benefits of simplicity of implementation and of economy of means, whilst making very high temporal accuracy possible.

Preferably, the service operator is permanently connected to the transmission server, in such a way as to permit immediate communication of all useful information, and in particular immediate transmission of command instructions to the transmission center by the transmission server.

The commands targeted by the instructions relating to data processings can pertain to any required operation. They preferably comprise:
- a triggering of at least one of the processings of data by the service operator;
- an interruption of at least one of the processings of data;
- and/or a triggering of a retrieval of at least one result of the data processings and of a transmission of said result to the transmission server.

It is not always necessary to synchronize all the operations relating to a processing of data. Thus, in a case where servers of the service operator trigger a processing as soon as the necessary information is available to them, there is no reason to send a command instruction to trigger this processing. Such a case is for example that for which interactive advertising is not proposed at the start of a live broadcast of a football match in respect of a next encounter unless the stadium has an insufficient degree of fill, the degree of fill being communicated directly to the service operator before the broadcast.

*Conversely,* in a case where the service operator automatically terminates a processing and transmits the results to the transmission server forthwith, it is not useful to send end of processing and triggering of retrieval instructions. Such is the case for example for a transmission whose last part depends on the summary of weather information broadcast in real time by a dedicated service: the triggering of the processing is commanded at the due moment via the transmission server, but the results are transmitted automatically to the latter a short time afterward.

In a first form of the processed data, the latter originate from the users. They then advantageously consist of votes or of responses to games. For example, at a triggering instant known in advance, a broadcaster triggers (via the automation system, the transmission server and the transmission center of the service operator) processings of responses to a game on servers. This triggering instant is situated a predetermined duration after the start, or before the end, of the relevant transmission. Next, at a results disclosure instant likewise predetermined with regard to the progress of the transmission, the broadcaster successively commands an interruption of the processings in progress and a retrieval of the results obtained (by means of instructions which are incomprehensible to the transmission server) and a displaying of the results (instruction destined for the transmission server), such as the winner of a competition or the number of participants. This display is achieved for example through a video inlay or a broadcast interactive service.

In a second form of the processed data, the latter are obtained independently of the users. They then advantageously pertain to broadcast images (for example, the end of a transmission depends on how matters have progressed during the transmission, via operations on the pictures broadcast) or to information originating from other services (for example, weather service) or from information providers (for example, operators associated with the organizing of sports events).

The invention also pertains to a processing module of a transmission center of a service operator. This module comprises:
- a unit for communicating information with at least one transmission server, said server being in particular intended to prepare transmission contents for incorporation into programs to be transmitted to users,
- and a unit for actions which relate to processings of data to be processed by said service operator.

According to the invention, the processing module furthermore comprises a synchronization unit designed to have access to at least one execution list for operator, said list comprising at least one pair of an instruction relating to a data processing by the service operator and of an associated processing command, said synchronization unit being capable, upon reception by the communication unit, of a command instruction originating from the transmission server:
- of comparing the command instruction with the instructions of the execution list,
- and when the command instruction corresponds to one of the instructions of the execution list, of engendering a request of immediate execution of the command associated with said instruction by means of the actions unit.

This processing module is adapted to implement the synchronizing process as claimed in one of the embodiments of the invention.

The immediate use of the execution list by the processing module for operator in order to recognize the command instruction received from the transmission server is very beneficial since it makes it possible to ensure very fast progress of operations ordered by the transmission server. In a manner which is unexpected with regard to the conventional techniques, use is thus made of an execution list which comprises no timetable. Specifically, the commands targeted by the instructions are presumed to be executed immediately.

Advantageously, the actions unit is capable of engendering actions relating to processings of data originating from at least one of the users, such as advantageously votes and/or responses to games. Such actions consist for example in ordering servers to produce averages or to tot up responses.

It is also advantageous for the actions unit to be capable of engendering actions relating to processings of data extracted from at least one of the programs. Such an action consists for example in ordering a specialized server to compare the speed of movement of several candidates to a game, with the aim of determining the continuation of the transmission.

The invention also pertains to a transmission center of a service operator, characterized in that it comprises at least one processing module for operator in accordance with any one of the embodiments of the invention.

Another subject of the invention is a service operator, characterized in that it comprises at least one transmission center in accordance with the invention.

The invention also applies to a processing module of a transmission server. This module comprises:
- a unit for communicating information with at least one transmission center of a service operator,
- and a unit for actions which relate to transmission contents which are to be incorporated into programs to be transmitted to users, said actions unit being capable of triggering a preparation of the contents and a transmission of said contents to a system for incorporating the contents into the programs, and being designed to immediately execute commands associated with instructions received from a command system.

According to the invention, the processing module for transmitter furthermore comprises a routing unit intended to immediately route the command instructions received to the transmission center when the actions unit is not capable of comprehending said instructions.

This processing module for transmitter is adapted to implement the synchronizing process as claimed in one of the implementation forms of the invention and/or to route said instructions to a broadcasting center in accordance with the invention.

The invention pertains moreover to a traffic system capable of creating execution lists. Each of these lists comprises trios of a timetable, of a device to be controlled and of a command instruction, the devices to be controlled comprising in particular at least one transmission server.

According to the invention, the traffic system is designed to incorporate into the lists, trios in which the device to be controlled is the transmission server and the associated instructions are data processing instructions, are incomprehensible to said server and are intended to be routed immediately by said server to at least one service operator.

This traffic system is adapted to implement the synchronizing process as claimed in one of forms of the invention.

Another subject of the invention is an execution list for transmitter, comprising trios of a timetable, of a device to be controlled and of a command instruction, said devices to be controlled comprising in particular of at least one transmission server.

According to the invention, for at least one of said trios, the device to be controlled is the transmission server and the associated instructions are data processing instructions, are incomprehensible to said server and are intended to be routed immediately by said server to at least one service operator.

This execution list for transmitter is produced by a traffic system in accordance with the invention.

The invention also pertains to a computer program product. According to the invention, it comprises functionalities able to implement the units of the processing module for operator, the units of the processing module for transmitter and/or the traffic system as claimed in any one of the forms of the invention.

The expression "computer program product" should be understood to mean a computer program medium, which may consist not only of a storage space containing the program, such as a diskette or a cassette, but also of a signal, such as an electrical or optical signal.

Naturally, in all the devices defined hereinabove, the units and modules are essentially functional entities, and not necessarily structural entities. Thus, they may in particular be grouped together within one and the same component or one and the same piece of software, or conversely be distributed among various components.

The invention will be better understood and illustrated by means of the following exemplary embodiments and implementations, which are in no way limiting, with reference to the appended figures in which:

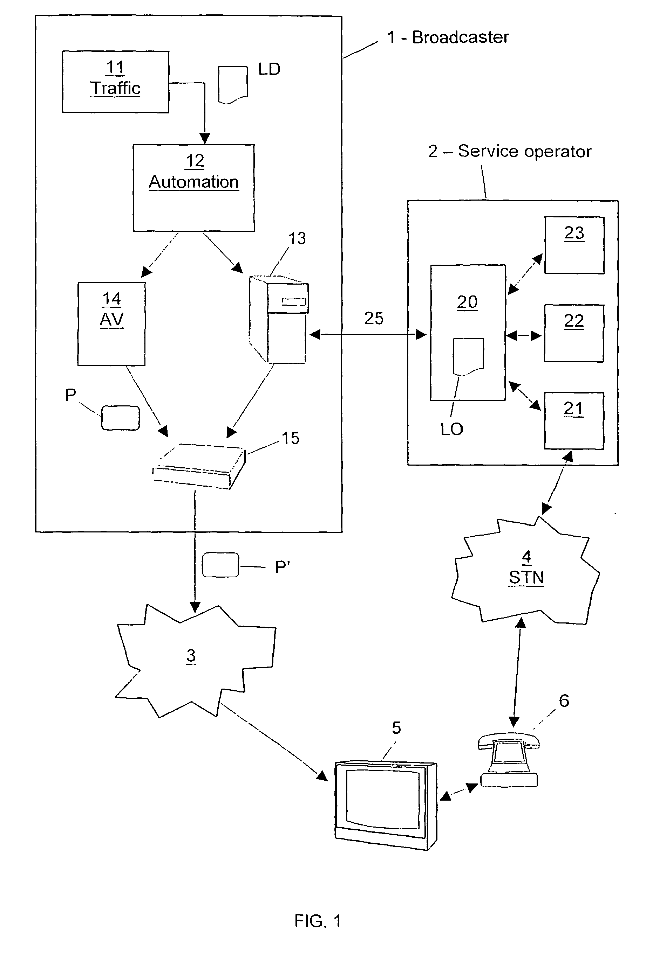

- figure 1 is a basic diagram of a transmission and reception assembly suitable for implementing the synchronization process of the invention, this assembly comprising in particular a broadcaster with transmission server (broadcasting server) and a service operator with transmission center (broadcasting center), in accordance with the invention;
- figure 2 represents more precisely the transmission server of figure 1 with functional blocks, linked with other elements;
- figure 3 represents more precisely the transmission center of figure 1 with functional blocks, linked with other elements;
- and figure 4 shows the transmission center of figure 1, in conjunction with several broadcasters of the type of that of figure 1.

A transmission and reception assembly comprises a broadcasting assembly or broadcaster 1, designed to transmit transmissions to users 5, such as interactive televisions, through a unidirectional network 3. It also comprises a service operator 2 connected to the broadcaster 1, designed to communicate with the users 5 via a bidirectional network 4. For example, the network 4 is a public switched telephone network (PSTN) and the users 5 are equipped with communication intermediaries 6 in the form of telephone connections.

The broadcaster 1 has available a traffic system 11, capable of creating and of managing execution lists LD for broadcaster and also has available an automation system 12, designed to implement these execution lists LD by acting on various devices of the broadcaster 1. Each of the execution lists LD exhibits a sequence of events programmed with a start time and an end time, a device to be controlled and a command to be executed. For each event and at the programmed time, the automation system 12 addresses itself to the indicated device and via a dedicated protocol, sends it the command indicated in the execution list LD.

The broadcaster 1 comprises in particular a broadcasting device 14 providing programs P, such as a video server or a video recorder, and a broadcasting server 13 providing contents of services (interactive services themselves or URLs) to be appended to the programs P, controlled by the automation system 12. The broadcasting server 13 is for example interfaced with the latter via an Ethernet network or a simple serial link, a command protocol being defined. The automation system 12 makes it possible in particular to trigger a looped broadcast (so-called "carousel" broadcast) of content for the duration of an associated audiovisual program P. It is able to command the broadcasting server 13 with regard to operations such as a commencement or an interruption of broadcasting of a service, and a triggering of display or of disappearance of a service on interactive terminals.

The traffic system 11 and automation system 12 permit, via the supervision of the broadcasting server 13 and of the broadcasting device 14, synchronization of the programs P with the associated contents, even should there be a delay or advance of these programs P. Specifically, the automation system 12 (for small modifications) or the traffic system 11 (for more important modifications) are capable of updating the execution list LD serving to organize the broadcasting operations over time. They are therefore called to adapt in particular the instants of the commands bound for the broadcasting server 13 and relating to the services.

An encoder 15 of the VBI (standing for Vertical Blanking Interval) type is designed to receive from the broadcasting device 14 and from the broadcasting server 13 respectively the programs P and the contents of services to be incorporated therein, and to immediately produce enhanced programs P' (analog mode) and communicate them to the users 5. In a variant embodiment (digital mode), the contents of services are conveyed together with the programs P by a technology of the DVB (standing for Digital Video Broadcasting) type.

The service operator 2 comprises a broadcasting center 20 and a plurality of on-line servers 21, 22 and 23 linked to the center and hosting interactive services. The servers 21 to 23 are linked up to the users 5 via the bidirectional network 4.

The broadcasting center 20 is permanently connected to the broadcasting server 13 by means of a link 25, such as in particular of the TCP/IP (standing for Transmission Control Protocol/Internet Protocol) type, on which is deployed a layer of an additional application package. For example, the link 25 consists of a bus having a Corba (standing for Common Object Request Broker Architecture) architecture. This link 25 serves in one direction in particular to program the broadcasting server 13 on the basis of administration applications present at the service operator 2, and in the other direction, to inform the service operator 2 of the state of the broadcasting server 13, of the progress of contents broadcasts, of any incidents, etc.

Moreover, the broadcasting center 20 has available an execution list LO for operator, which comprises pairs of reference instructions and of associated commands, but which has the particular feature of containing no timetable. This execution list LO serves to immediately execute command instructions originating from the broadcasting server 13, as will be explained hereinbelow.

The users 5 have available means for portraying the enhanced programs P', in the form of a graphical or textual display of the contents (interpretation of data received) overlaid, for example, of the video of the corresponding programs P (decoding and display of video). When these contents are broadcast URLs or references, the users 5 have access to the services via the on-line servers 21 to 23, each of the URLs determining the server to which the user 5 must address himself as well as the service to be invoked on this server. The users 5 are moreover able to communicate with the services with which the contents invite them to interact, via the initiation of connections with the appropriate on-line servers 21 to 23.

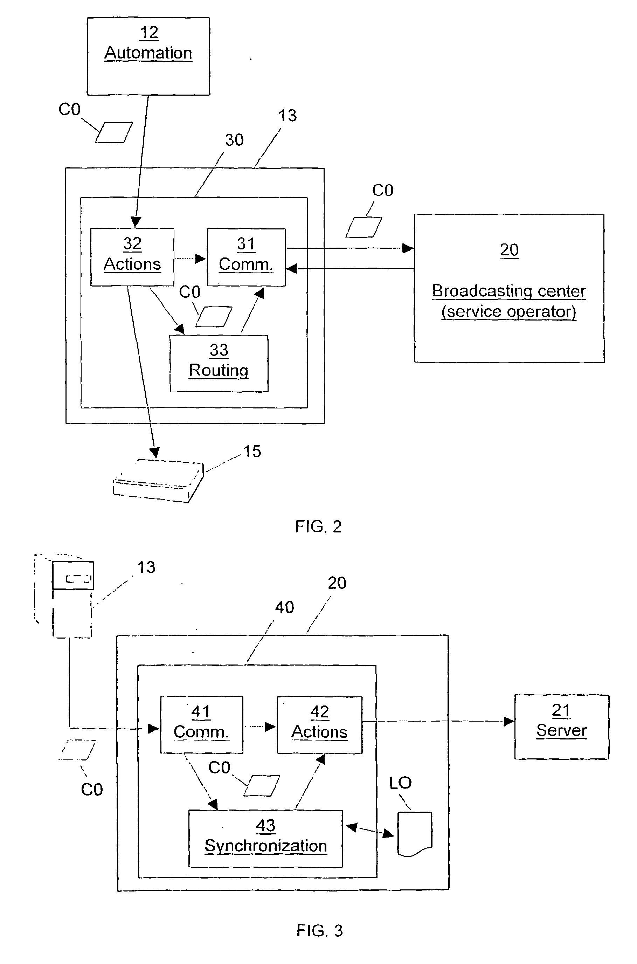

The broadcasting server 13 and the broadcasting center 20 will now be explained further with regard to processings of data, with reference to figures 2 and 3.

The broadcasting server 13 (figure 2) comprises in particular a processing module 30 which includes a unit 31 for communicating information with the broadcasting center 20 of the service operator 2 and a unit 32 for actions which relate to service contents, which unit is controlled by the automation system 12. It also includes a routing unit 33, intended for immediately routing to the broadcasting center 20 any instruction C0 not comprehended by the actions unit 32. The latter is thus designed to perform an interpretation of the command instructions received from the automation system 12, and according to their content, so as to act:
- either on a transfer of information between the broadcasting server 13 and the broadcasting center 20 by means of the communication unit 31 engendering same,
- or on a transfer to the encoder 15 of specified contents,
- or on a simple immediate transmission of the command instructions to the broadcasting center 20 should the interpretation fail.

The instructions received and comprehended by the actions unit 32 may for their part pertain to other types of communications with the broadcasting center 20, which are not synchronized with the broadcasting of programs. This may involve for example sending to the service operator 2 information regarding the state of the broadcasting server or regarding malfunctions. In this case, the actions unit 32 acts directly on the communication unit 31 (dotted arrow).

The broadcasting center 20 (figure 3) comprises for its part a processing module 40 including a unit 41 for communicating with the broadcasting server 13 and an actions unit 42, suitable for sending instructions to the servers 21 to 23, in particular in respect of processings of data. It also includes a synchronization unit 43 having access to the execution list LO for operator. This unit 43 is designed:
- to receive any command instruction from the communication unit 41,
- to compare this instruction with the reference instructions of the execution list LO
- and, when dealing with an instruction C0 corresponding to one of the reference instructions, to engender a request for immediate execution by the actions unit 42 of the associated command, either in the broadcasting center 20 or at the appropriate server (for example the server 21).

Other types of information originating from the broadcasting server 13 do not require synchronization with the broadcasting of programs and are transmitted directly by the communication unit 41 to the actions unit 42, without passing via the synchronization unit 43 (dotted arrow). This involves for example information relating to the progress of contents broadcasts or to malfunctions.

In practice, the broadcasting center 20 advantageously comprises a dedicated application package, listening out for events going back up via the link 25 and programmed with the execution list LO.

During operation, in order to execute operations relating to processings of data in due time in the course of transmissions, the following is undertaken:
- the execution list LD for broadcaster is prepared by means of the traffic system 11, by including therein instructions C0 pertaining to the operations relating to the processings of data and by allocating them to the broadcasting server 13;
- the automation system 12 is used as the means of acting in accordance with the execution list LD, by synchronously triggering all the actions to be executed by the broadcasting device 14 and the broadcasting server 13;
- when the broadcasting server 13 receives the instructions C0 relating to the processings of data, it does not comprehend them and transmits them immediately to the broadcasting center 20 without triggering the action and without raising an alarm; the latter then establishes a correspondence with reference instructions of the execution list LO for operator available to it, and requests executions of the associated commands.

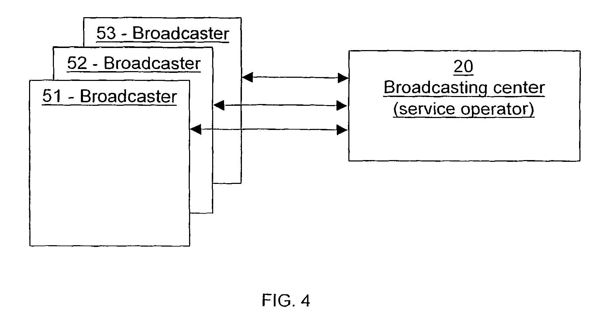

The broadcasting center 20 is moreover suitable for coping with the services in respect of several broadcasters 51, 52 and 53 (figure 4).

This technique is for example applied to an audiovisual program implementing a game with responses, by means of an interactive service. Requests sent by the users 5 have to be collected by the on-line servers 21 to 23 and be consolidated before the end of the program for a utilization which takes one of the following forms:
- the results of the processing (degree of participation, response, winner, etc.) are announced in the audiovisual program itself, by the presenter or through an inlay;
- the results of the processing are broadcast in the form of an interactive service during the transmission.

The execution list LD for broadcaster which is used may then have the form given in table 1 hereinbelow, where the first column indicates the triggering time, and the second and third columns give the instructions destined respectively for the broadcasting device 14 and for the broadcasting server 13:

**Table 1 - Execution list LD**

| **Time** | **Broadcasting device 14** | **Broadcasting server 13** |
|---|---|---|
| ... | ... | ... |
| 11 h00 | Start_Program1 | Start_Broadcast App1 |
| 11 h10 | | Start_Display App1_Scene1 |
| 11 h25 | | Start_Display App1_Scene2 |
| 11 h27 | | Start_Response_Processing App1 |
| 11h30 | Stop_Program1 | Stop_Display App1_Scene1, App1_Scene2 StopBroadcast App1 |
| ... | ... | ... |

The instructions indicated in this table have the following meaning:
- Start_Program1 and Stop_Program1: respectively start and end of broadcasting of a program 1;
- Start_Broadcast App1 and StopBroadcast App1: respectively start and end of broadcasting of an interactive application 1;
- Start_Display App1_Scene1 and Start_Display App1_Scene2: respectively start of display at the users of scenes 1 and 2 of application 1;
- Stop_Display App1_Scene1 and Stop_Display App1_Scene2: respectively end of display at the users of scenes 1 and 2 of application 1;
- Start_Response_Processing App1; start of processing of data for application 1; this instruction is not directly executable by the broadcasting server 13, which is not capable of comprehending it; when it receives it, it is therefore envisaged that it should transfer it immediately to the service operator 2.

The execution list LO for operator can for its part take the form as indicated in table 2, where the first column gives the instructions received and transmitted directly by the broadcasting server 13, and the second column gives the corresponding commands to be performed by the service operator 2:

**Table 2 - Execution list LO**

| **Broadcasting server 13** | **Broadcasting center 20** |
|---|---|
| ... | ... |
| Start_Response_Processing App1 | "http://141.12.153.10?consolider_rep onses&application=App1" |
| ... | ... |

In this instance, on receipt of the synchronization word "Start_Response_Processing App1", there is provision for the broadcasting center 20 to send a request to an http server, for example via an Ethernet connection or a modem line (remote server), and to ask it to perform a consolidation processing on the responses collected within the context of the interactive service identified under the name "App1". To do this, the service operator 2 and the broadcaster 1 have come to an agreement beforehand.

If during the progress of the programs, a sports event upsets the initially envisaged programming and shifts the broadcasting of the program "program 1" by 10 minutes, the broadcaster 1 edits his execution list LD so as to retrieve the timetable modification and, consequently, all the dependent events are then shifted by as much.

Thus, the broadcaster 1 is assured that regardless of the vagaries of broadcasting, not only is the service broadcast in a completely synchronous manner with the audiovisual program, but the processings envisaged during transmission are also performed without any shift with respect to the progress of the transmission, at the instants indicated. It may thus propose processings at key moments of the transmission, so as to broadcast for example the result of these processings in the form of interactive services of the information portal kind.

## Claims

1. A process for synchronizing the transmission of programs to users (5) and the incorporation of transmission contents into said programs, in which:
- command instructions are sent in a time-organized manner to at least one transmission device (14) for transmitting programs and to at least one transmission server (13),
- said programs and said contents are produced respectively by means of said transmission device (14) and of said transmission server (13), under the immediate effect of said commands,
- and said contents are incorporated forthwith into said programs before transmission to the users (5),
**characterized in that**:
- instructions which are incomprehensible to said server (13) and relate to processings of data to be processed by at least one service operator (2) are sent among said command instructions submitted to said transmission server (13),
- when said server (13) receives command instructions which it is incapable of comprehending, said instructions are immediately routed to at least one transmission center (20) of said service operator (2) by means of said server (13),
- and immediate executions of said commands emanating from the instructions received by said transmission center (20) are triggered by means of said transmission center (20),
in such a way that the transmission of the programs is synchronized with operations relating to the processings of said data,
said transmission to the users preferably being a broadcasting.

2. The synchronizing process as claimed in claim 1, **characterized in that** said commands targeted by said command instructions comprise:
- a triggering of at least one of said processings of data by the service operator (2);
- an interruption of at least one of said processings of data;
- and/or a triggering of a retrieval of at least one result of said data processings and of a transmission of said result to said transmission server (13).

3. A processing module (40) of a transmission center (20) of a service operator (2), said module (40) comprising:
- a unit (41) for communicating information with at least one transmission server (13), said server (13) being in particular intended to prepare transmission contents for incorporation into programs to be transmitted to users (5),
- and a unit (42) for actions which relate to processings of data to be processed by said service operator (2),
**characterized in that** it furthermore comprises a synchronization unit (43) designed to have access to at least one execution list (LO) for operator, said list (LO) comprising at least one pair of an instruction relating to a data processing by the service operator (2) and of an associated processing command, said synchronization unit (43) being capable, upon reception by said communication unit (41), of a command instruction originating from said transmission server (13):
- of comparing said command instruction with said instructions of said execution list (LO),
- and when said command instruction (C0) corresponds to one of said instructions of said execution list (LO), of engendering a request of immediate execution of the command associated with said instruction by means of said actions unit (42),
- said processing module (40) being adapted to implement the synchronizing process as claimed in one of claims 1 or 2.

4. The processing module (40) for operator as claimed in claim 3, **characterized in that** said actions unit (42) is capable of engendering actions relating to processings of data originating from at least one of said users (5), such as advantageously votes and/or responses to games.

5. The processing module (40) for operator as claimed in one of claims 3 or 4, **characterized in that** said actions unit (42) is capable of engendering actions relating to processings of data extracted from at least one of said programs.

6. A broadcasting center (20) of a service operator (2), **characterized in that** it comprises at least one processing module (40) for operator in accordance with any one of claims 3 to 5.

7. A service operator (2), **characterized in that** it comprises at least one transmission center (20) in accordance with claim 6.

8. A processing module (30) of a transmission server (13), comprising:
- a unit (31) for communicating information with at least one transmission center (20) of a service operator (2),
- and a unit (32) for actions which relate to transmission contents which are to be incorporated into programs to be transmitted to users (5), said actions unit (32) being capable of triggering a preparation of said contents and a transmission of said contents to a system (15) for incorporating said contents into said programs, and being designed to immediately execute commands associated with instructions received from a command system (12),
**characterized in that** said processing module (30) for transmitter furthermore comprises a routing unit (33) intended to immediately route said command instructions (C0) received to said transmission center (20) when said actions unit (32) is not capable of comprehending said instructions,
said processing module (30) for transmitter being adapted to implement the synchronizing process as claimed in one of claims 1 or 2 and/or to route said instructions to a broadcasting center (20) in accordance with claim 6.

9. A traffic system (11) capable of creating execution lists (LD), each of said lists (LD) comprising trios of a timetable, of a device to be controlled and of a command instruction, said devices to be controlled comprising in particular at least one transmission server (13),
**characterized in that** said traffic system (11) is designed to incorporate into said lists (LD), trios in which the device to be controlled is said transmission server (13) and said associated instructions are data processing instructions, are incomprehensible to said server (13) and are intended to be routed immediately by said server (13) to at least one service operator (2),
said traffic system (11) being adapted to implement the synchronizing process as claimed in one of claims 1 or 2.

10. An execution list (LD) for transmitter, comprising trios of a timetable, of a device to be controlled and of a command instruction, said devices to be controlled comprising in particular at least one transmission server (13),
**characterized in that** for at least one of said trios, the device to be controlled is said transmission server (13) and said associated instructions are data processing instructions, are incomprehensible to said server (13) and are intended to be routed immediately by said server (13) to at least one service operator (2),
said execution list (LD) for transmitter being produced by a traffic system (11) in accordance with claim 9.

11. A computer program product, **characterized in that** it comprises functionalities able to implement said units (41-43) of the processing module (40) for operator as claimed in any one of claims 3 to 5, said units (31-33) of the processing module (30) for transmitter as claimed in claim 8 and/or the traffic system (11) as claimed in claim 9.

## Patentansprüche

1. Verfahren zum Synchronisieren der Übertragung von Programmen an Nutzer (5) und für die Integration von Übertragungsinhalten in die Programme, wobei in dem Verfahren:
- Befehlsanweisungen auf zeitlich organisierte Weise an mindestens eine Übertragungsvorrichtung (14) zum Übertragen der Programme und an mindestens einen Übertragungsserver (13) gesendet werden,
- die Programme und die Inhalte gemäß der sofortigen Wirkung der Befehle mittels der Übertragungsvorrichtung (14) bzw. mittels des Übertragungsservers (13) produziert werden,
- und die Inhalte vor der Übertragung an die Nutzer (5) sogleich in die Programme integriert werden,
**dadurch gekennzeichnet, dass**
- unter den Befehlsanweisungen, die an den Übertragungsserver (13) übergeben werden, Anweisungen gesendet werden, die für den Server (13) unverständlich sind und die sich auf durch mindestens einen Dienstbetreiber (2) zu verarbeitende Verarbeitungen von Daten beziehen,
- wenn der Server (13) Befehlsanweisungen empfängt, die er nicht verstehen kann, die Anweisungen mittels des Servers (13) sofort an mindestens eine Übertragungszentrale (20) des Dienstbetreibers (2) geleitet werden,
- und mittels der Übertragungszentrale (20) die sofortigen Ausführungen der Befehle ausgelöst werden, die von den durch die Übertragungszentrale (20) empfangenen Anweisungen ausgehen,
in der Weise, dass die Übertragung der Programme mit Operationen, die sich auf die Verarbeitungen der Daten beziehen, synchronisiert wird,
wobei die Übertragung an die Nutzer vorzugsweise eine Rundfunkübertragung ist.

2. Synchronisationsverfahren nach Anspruch 1, **dadurch gekennzeichnet, dass** die durch die Befehlsanweisungen gerichteten Befehle umfassen:
- ein Auslösen mindestens einer der Verarbeitungen der Daten durch den Dienstbetreiber (2);
- eine Unterbrechung mindestens einer der Verarbeitungen der Daten;
- und/oder ein Auslösen einer Wiedergewinnung mindestens eines Ergebnisses der Datenverarbeitungen und einer Übertragung des Ergebnisses an den Übertragungsserver (13).

3. Verarbeitungsmodul (40) einer Übertragungszentrale (20) eines Dienstbetreibers (2), wobei das Modul (40) umfasst:
- eine Einheit (41) zum Übermitteln von Informationen mit mindestens einem Übertragungsserver (13), wobei der Server (13) insbesondere für die Vorbereitung von Übertragungsinhalten für die Integration in an Nutzer (5) zu übertragende Programme bestimmt ist,
- und eine Einheit (42) für Aktionen, die sich auf Verarbeitungen von durch den Dienstbetreiber (2) zu verarbeitenden Daten beziehen,
**dadurch gekennzeichnet, dass** es darüber hinaus eine Synchronisationseinheit (43) umfasst, die so ausgelegt ist, dass sie Zugang zu mindestens einer Ausführungsliste (LO) für den Betreiber hat, wobei die Liste (LO) mindestens ein Paar aus einer Anweisung, die sich auf eine Datenverarbeitung durch den Dienstbetreiber (2) bezieht, und aus einem zugeordneten Verarbeitungsbefehl umfasst, wobei die Synchronisationseinheit (43) beim Empfang einer von dem Übertragungsserver (13) ausgehenden Befehlsanweisung durch die Kommunikationseinheit (41) Folgendes ausführen kann:
- Vergleichen der Befehlsanweisung mit den Anweisungen der Ausführungsliste (LO),
- wobei dann, wenn die Befehlsanweisung (C0) einer der Anweisungen der Ausführungsliste (LO) entspricht, eine Anforderung zur sofortigen Ausführung des der Anweisung zugeordneten Befehls mittel der Aktionseinheit (42) erzeugt wird,
- wobei das Verarbeitungsmodul (40) so ausgelegt ist, dass es den Synchronisationsprozess nach einem der Ansprüche 1 oder 2 implementiert.

4. Verarbeitungsmodul (40) für einen Betreiber nach Anspruch 3, **dadurch gekennzeichnet, dass** die Aktionseinheit (42) Aktionen erzeugen kann, die sich auf Verarbeitungen von Daten, die von mindestens einem der Nutzer (5) ausgehen, wie etwa vorteilhaft Abstimmungsstimmen und/oder Antworten auf Spiele beziehen.

5. Verarbeitungsmodul (40) für einen Betreiber nach einem der Ansprüche 3 oder 4, **dadurch gekennzeichnet, dass** die Aktionseinheit (42) Aktionen erzeugen kann, die sich auf Verarbeitungen von Daten beziehen, die von mindestens einem der Programme ausgekoppelt werden.

6. Rundfunkzentrale (20) eines Dienstbetreibers (2),
**dadurch gekennzeichnet, dass** sie mindestens ein Verarbeitungsmodul (40) für einen Betreiber in Übereinstimmung mit einem der Ansprüche 3 bis 5 umfasst.

7. Dienstbetreiber (2), **dadurch gekennzeichnet, dass** er mindestens eine Übertragungszentrale (20) in Übereinstimmung mit Anspruch 6 umfasst.

8. Verarbeitungsmodul (30) eines Übertragungsservers (13), wobei das Verarbeitungsmodul umfasst:
- eine Einheit (31) zum Übermitteln von Informationen mit mindestens einer Übertragungszentrale (20) eines Dienstbetreibers (2),
- und eine Einheit (32) für Aktionen, die sich auf Übertragungsinhalte beziehen, die in an Nutzer (5) zu übertragende Programme zu integrieren sind, wobei die Aktionseinheit (32) eine Vorbereitung der Inhalte und eine Übertragung der Inhalte an ein System (15) zum Integrieren der Inhalte in die Programme auslösen kann, wobei sie so ausgelegt ist, dass sie die von einem Befehlssystem (12) empfangenen Anweisungen zugeordneten Befehle sofort ausführt,
**dadurch gekennzeichnet, dass** das Verarbeitungsmodul (30) für den Sender darüber hinaus eine Routing-Einheit (33) umfasst, die die von der Sendezentrale (20) empfangenen Befehlsanweisungen (C0) sofort leiten soll, wenn die Aktionseinheit (32) die Anweisungen nicht verstehen kann,
wobei das Verarbeitungsmodul (30) für den Sender so ausgelegt ist, dass es den wie in einem der Ansprüche 1 oder 2 beanspruchten Synchronisationsprozess implementiert und/oder die Anweisungen an eine Rundfunkzentrale (20) in Übereinstimmung mit Anspruch 6 leitet.

9. Verkehrssystem (11), das Ausführungslisten (LD) erstellen kann, wobei jede der Listen (LD) Dreiergruppen aus einem Zeitplan, aus einer zu steuernden Vorrichtung und aus einer Befehlsanweisung umfasst, wobei die zu steuernden Vorrichtungen insbesondere mindestens einen Übertragungsserver (13) umfassen,
**dadurch gekennzeichnet, dass** das Verkehrssystem (11) so ausgelegt ist, dass es in die Listen (LD) Dreiergruppen integriert, in denen die zu steuernde Vorrichtung der Übertragungsserver (13) ist und in denen die zugeordneten Anweisungen Datenverarbeitungsanweisungen sind, für den Server (13) unverständlich sind und dafür bestimmt sind, durch den Server (13) sofort an mindestens einen Dienstbetreiber (2) geleitet zu werden,
wobei das Verkehrssystem (11) so ausgelegt ist, dass es den wie in einem der Ansprüche 1 oder 2 beanspruchten Synchronisationsprozess implementiert.

10. Ausführungsliste (LD) für einen Sender, die Dreiergruppen aus einem Zeitablaufplan, aus einer zu steuernden Vorrichtung und aus einer Befehlsanweisung umfasst, wobei die zu steuernden Vorrichtungen insbesondere mindestens einen Übertragungsserver (13) umfassen,
**dadurch gekennzeichnet, dass** die zu steuernde Vorrichtung für mindestens eine der Dreiergruppen der Übertragungsserver (13) ist und die zugeordneten Anweisungen Datenverarbeitungsanweisungen sind, für den Server (13) unverständlich sind und dafür bestimmt sind, durch den Server (13) sofort zu mindestens einem Dienstbetreiber (2) geleitet zu werden,
wobei die Ausführungsliste (LD) für den Sender durch ein Verkehrssystem (11) in Übereinstimmung mit Anspruch 9 produziert wird.

11. Computerprogrammprodukt, **dadurch gekennzeichnet, dass** es Funktionalitäten umfasst, die die Einheiten (41-43) des wie in einem der Ansprüche 3 bis 5 beanspruchten Verarbeitungsmoduls (40) für einen Betreiber die Einheiten (31-33) des wie in Anspruch 8 beanspruchten Verarbeitungsmoduls (30) für einen Sender und/oder des wie in Anspruch 9 beanspruchten Verkehrssystems (11) implementieren können.

## Revendications

1. Procédé de synchronisation de diffusion de programmes vers des utilisateurs (5) et d'incorporation de contenus de diffusion dans lesdits programmes, dans lequel :
- des instructions de commandes sont envoyées de manière organisée dans le temps à au moins un dispositif de diffusion (14) des programmes et à au moins un serveur de diffusion (13),
- lesdits programmes et lesdits contenus sont produits respectivement au moyen dudit dispositif de diffusion (14) et dudit serveur de diffusion (13), sous l'effet immédiat desdites commandes,
- et lesdits contenus sont aussitôt incorporés dans lesdits programmes avant diffusion vers les utilisateurs (5),
**caractérisé en ce que** :
- des instructions qui sont incompréhensibles pour ledit serveur (13) et qui sont relatives à des traitements de données à traiter par au moins un opérateur de services (2) sont envoyées parmi lesdits instructions de commandes soumises audit serveur de diffusion (13),
- lorsque ledit serveur (13) reçoit des instructions de commandes qu'il est incapable de comprendre, lesdites instructions sont immédiatement routées vers au moins un centre de diffusion (20) dudit opérateur de services (2) au moyen dudit serveur (13),
- et des exécutions immédiates desdites commandes issues des instructions reçues par ledit centre de diffusion (20) sont déclenchées au moyen dudit centre de diffusion (20),
de telle sorte la diffusion des programmes est synchronisée avec des opérations relatives aux traitements desdites données,
ladite diffusion vers les utilisateurs étant de préférence une diffusion générale.

2. Procédé de synchronisation selon la revendication 1, **caractérisé en ce que** lesdites commandes visées par lesdites instructions de commande comprennent :
- un déclenchement d'au moins un desdits traitements de données par l'opérateur de services (2) ;
- une interruption d'au moins un desdits traitements de données ;
- et / ou un déclenchement d'une récupération d'au moins un résultat desdits traitements de données et d'une transmission dudit résultat audit serveur de diffusion (13).

3. Module de traitement (40) d'un centre de diffusion (20) d'un opérateur de services (2), ledit module (40) comprenant :
- une unité de communication (41) d'informations avec au moins un serveur de diffusion (13), ledit serveur (13) étant notamment destiné à préparer des contenus de diffusion pour incorporation dans des programmes à diffuser vers des utilisateurs (5),
- et une unité d'actions (42) relatives à des traitements de données à traiter par ledit opérateur de services (2),
**caractérisé en ce qu'**il comprend en outre une unité de synchronisation (43) prévue pour avoir accès à au moins une liste d'exécution (LO) pour opérateur, ladite liste (LO) comprenant au moins un couple d'une instruction relative à un traitement de données par l'opérateur de services (2) et d'une commande de traitement associée, ladite unité de synchronisation (43) étant capable, dès réception par ladite unité de communication (41), d'une instruction de commande en provenance dudit serveur de diffusion (13) :
- de comparer ladite instruction de commande aux dites instructions de ladite liste d'exécution (LO),
- et lorsque ladite instruction de commande (C0) correspond à l'une desdites instructions de ladite liste d'exécution (LO), de provoquer une requête d'exécution immédiate de la commande associée à ladite instruction au moyen de ladite unité d'actions (42),
ledit module de traitement (40) étant adapté à mettre en oeuvre le procédé de synchronisation selon l'une des revendications 1 ou 2.

4. Module de traitement (40) pour opérateur selon la revendication 3, **caractérisé en ce que** ladite unité d'actions (42) est capable de provoquer des actions relatives à des traitements de données en provenance d'au moins un desdits utilisateurs (5), telles qu'avantageusement des votes et / ou des réponses à des jeux.

5. Module de traitement (40) pour opérateur selon l'une des revendications 3 ou 4, **caractérisé en ce que** ladite unité d'actions (42) est capable de provoquer des actions relatives à des traitements de données extraites d'au moins un desdits programmes.

6. Centre de diffusion (20) d'un opérateur de services (2), **caractérisé en ce qu'**il comprend au moins un module de traitement (40) pour opérateur conforme à l'une quelconque des revendications 3 à 5.

7. Opérateur de services (2), **caractérisé en ce qu'**il comprend au moins un centre de diffusion (20) conforme à la revendication 6.

8. Module de traitement (30) d'un serveur de diffusion (13), comprenant :
- une unité de communication (31) d'informations avec au moins un centre de diffusion (20) d'un opérateur de services (2),
- et une unité d'actions (32) relatives à des contenus de diffusion devant être incorporés dans des programmes à diffuser à des utilisateurs (5), ladite unité d'actions (32) étant capable de déclencher une préparation desdits contenus et une transmission desdits contenus à un système d'incorporation (15) desdits contenus dans lesdits programmes, et étant prévue pour exécuter immédiatement des commandes associées à des instructions reçues d'un système de commande (12),
**caractérisé en ce que** ledit module de traitement (30) pour diffuseur comprend en outre une unité de routage (33) destinée à router immédiatement lesdites instructions de commandes (C0) reçues vers ledit centre de diffusion (20) lorsque ladite unité d'actions (32) n'est pas capable de comprendre lesdites instructions,
ledit module de traitement (30) pour diffuseur étant adapté à mettre en oeuvre le procédé de synchronisation selon l'une des revendications 1 ou 2 et / ou à router lesdites instructions vers un centre de diffusion (20) conforme à la revendication 6.

9. Système de trafic (11) capable de créer des listes d'exécution (LD), chacune desdites listes (LD) comprenant des triplets d'un horaire, d'un dispositif à piloter et d'une instruction de commande, lesdits dispositifs à piloter comprenant notamment au moins un serveur de diffusion (13),
**caractérisé en ce que** ledit système de trafic (11) est prévu pour incorporer dans lesdites listes (LD) des triplets dans lesquels le dispositif à piloter est ledit serveur de diffusion (13) et lesdites instructions associées sont des instructions de traitements de données, sont incompréhensibles par ledit serveur (13) et sont destinées à être routées immédiatement par ledit serveur (13) vers au moins un opérateur de services (2),
ledit système de trafic (11) étant adapté à mettre en oeuvre le procédé de synchronisation selon l'une des revendications 1 ou 2.

10. Liste d'exécution (LD) pour diffuseur, comprenant des triplets d'un horaire, d'un dispositif à piloter et d'une instruction de commande, lesdits dispositifs à piloter comprenant notamment au moins un serveur de diffusion (13),
**caractérisé en ce que** pour au moins un desdits triplets, le dispositif à piloter est ledit serveur de diffusion (13) et lesdites instructions associées sont des instructions de traitements de données, sont incompréhensibles par ledit serveur (13) et sont destinées à être routées immédiatement par ledit serveur (13) vers au moins un opérateur de services (2),
ladite liste d'exécution (LD) pour diffuseur étant produite par un système de trafic (11) conforme à la revendication 9.

11. Produit programme d'ordinateur, **caractérisé en ce qu'**il comprend des fonctionnalités aptes à mettre en oeuvre lesdites unités (41-43) du module de traitement (40) pour opérateur selon l'une quelconque des revendications 3 à 5, lesdites unités (31-33) du module de traitement (30) pour diffuseur selon la revendication 8 et / ou le système de trafic (11) selon la revendication 9.
